# FASCICULE DE BREVET EUROPEEN

(11) **EP 1 289 307 B1**
(45) Date de publication et mention de la délivrance du brevet: **07.10.2015**
(21) Numéro de dépôt: 02078134.0
(22) Date de dépôt: 30.07.2002
(51) Int. Cl.: H04N 19/89, H04N 19/70

(54) **Méthode de codage vidéo**
Videokodierungsverfahren
Video coding method

(30) Priorité: 07.08.2001 FR 0110543
(43) Date de publication de la demande: 05.03.2003
(73) Titulaire: Koninklijke Philips N.V., 5656 AE Eindhoven (NL)
(72) Inventeur: Paulin, Jacques, Société Civile S.P.I.D., 75008 Paris (FR)
(74) Mandataire: Roche, Denis

(56) Documents cités:
- EP-A- 1 094 672
- JEONG-HOON PARK ET AL.: "GFID Numbering Rule for Pictue Header Recovery" ITU - TELECOMMUNICATIONS STANDARDIZATION SECTOR - STUDY GROUP 16 - VIDEO CODING EXPERTS GROUP (QUESTION 15), 19 octobre 1999 (1999-10-19), pages 1-4, XP002199784 Red Bank, New Jersey, USA
- "ITU-T Recommendation H.263 - Video Coding for Low Bit Rate Communication" ITU - TELECOMMUNICATION STANDARDIZATION SECTOR - SERIES H: AUDIOVISUAL AND MULTIMEDIA SYSTEMS, février 1998 (1998-02), page 33+86+98 XP002199785

## Description

### DOMAINE DE L'INVENTION

L'invention concerne un procédé de codage d'une séquence d'images pour délivrer une séquence d'images codées, et un procédé de décodage desdites images codées permettant en cas de perte de l'entête d'image d'une image codée courante, de pouvoir décoder ladite image courante.

L'invention concerne également un système de codage et un système de décodage vidéo implémentant les différentes étapes de traitement desdits procédés de codage et de décodage.

Elle a de nombreuses applications lors de la transmission sur un canal d'un signal vidéo codé dans un environnement sujet aux erreurs de transmission.

### ARRIERE PLAN TECHNOLOGIQUE DE L'INVENTION

La compression vidéo est utilisée dans de nombreuses applications, que ce soit dans des applications professionnelles mais aussi orientées vers une utilisation par le grand public.

La compression vidéo est en particulier utilisée dans des applications de type téléphonie ou vidéo-téléphonie, ou en plus des données audio transmises et échangées entre plusieurs correspondants, des données de type vidéo sont simultanément envoyées. Dans de telles applications, la bande passante des canaux de communication sur lesquels sont transmises les données vidéo reste encore très limitée compte tenu du volume important des données vidéo à transmettre pour avoir une qualité acceptable des images constituant le signal vidéo codé. Il est donc nécessaire de faire appel à des normes de compression vidéo adaptées aux faibles bandes passantes, en particulier à la norme de compression vidéo H.263 qui est plus particulièrement dédiée au codage de signaux vidéo de petit format permettant de générer des signaux vidéo codés de quelques dizaines de kilo-bits par seconde.

Dans le cadre d'applications de type téléphonie ou vidéo-téléphonie, les signaux vidéo sont transmis sur des canaux souvent perturbés soit en raison de la saturation de la bande passante desdits canaux ou de coupures de transmission, notamment lors de transmission sans fils, ces perturbations entraînant des pertes de données dans les signaux vidéo transmis qui sont reçus par le décodeur. Dans le but de limiter les effets de ces perturbations, la norme H.263 prévoit de protéger les données vidéo composant chaque image du signal vidéo au niveau de l'encodeur avant transmission sur les canaux de transmission. Pour cela, cette norme suggère de découper chaque image en tranches qui sont codées indépendamment les unes des autres. De cette façon, une perte de données qui survient dans une tranche codée d'une d'image courante n'affecte pas les autres tranches de ladite image courante qui peuvent ainsi être décodées sous certaines conditions. Le décodage des autres tranches de ladite image courante est envisageable seulement si le contenu de son entête d'image n'a pas été perdu.

Le brevet européen EP1094672 décrit un procédé qui permet de décoder dans certains cas une image courante (ou certaines tranches d'image seulement) ayant perdu son entête d'image. En effet, ce procédé permet dans certains cas de récupérer les paramètres de décodage indispensables au décodage de l'image courante qui auraient du être se trouver dans l'entête d'image perdu.

Ce procédé connu tire profit du fait que la norme H.263 prévoit que chaque image codée comprend un entête d'image et a la possibilité d'être découpée en tranches comprenant un entête de tranche, chaque entête de tranche comprenant un champ identificateur pour être identifié. Les champs identificateurs, dénommés GFID dans la syntaxe de cette norme et comportant deux bits, répondent à des règles de codage définis par les règles suivantes : les champs identificateurs sont identiques pour les tranches d'une même image codée, l'identité des entêtes d'images d'une image codée courante et précédente entraîne l'identité des champs identificateurs de ces deux images, un changement dans l'entête d'image d'une image codée courante par rapport à celui d'une image codée précédente entraîne le changement des champs identificateurs de l'image courante.

Au décodage, si les champs identificateurs des images précédente et courante sont différents, il est possible d'en déduire que les entêtes d'image ont changé, c'est à dire que les champs qui composent ces entêtes d'image ont changé, mais il n'est pas possible de savoir quel champ en particulier constituant l'entête a changé. Tout en respectant la norme H.263, ce procédé connu prévoit donc de définir des règles additionnelles de codage du champ identificateur GFID pour pouvoir déterminer au décodage quel champ de l'entête d'image a changé en particulier, et quelle est sa nouvelle valeur à utiliser pour l'image courante.

Ce procédé connu présente un certain nombre de limitations.

Tout d'abord, lorsque les champs identificateur de l'image précédente et courante sont différents, ce procédé connu ne permet d'identifier le changement que d'un seul champ à la fois dans les entêtes d'image. Ainsi, si plusieurs champs appartenant aux entêtes d'image de l'image précédente et courante ont en réalité changé, seul le champ considéré comme le plus prioritaire par ce procédé sera détecté, et sa valeur pour l'image courante déduite. Ce procédé ne permet donc pas de détecter que plusieurs champ dans les entêtes d'image ont changé. Par conséquent les champs non détectés peuvent empêcher le décodage correct de l'image courante.

D'autre part, au codage, ce procédé prévoit que le champ identificateur GFID(n) de l'image courante est déduit du champ identificateur GFID(n-1) de l'image précédente par une opération binaire, en fonction du changement d'un ensemble de champs classés arbitrairement par ordre de priorité croissante. La valeur du champ identificateur GFID(n) est donc obtenue de manière relative par rapport au champ identificateur GFID(n-1). Lorsque plusieurs images sont perdues, par exemple si (n-i) images sont perdues, ce procédé devient inopérant puisqu'au décodage le champ identificateur GFID(n-1) n'est pas disponible compte tenu que l'image de rang (N-1) a été perdu. Une comparaison entre le champ GFID(n) et le champ identificateur GFID(n-i), c'est à dire avec le champ identificateur GFID(n-i) de la dernière image disponible, n'a pas de sens car le nombre d'images perdu n'est a priori pas connu et que cette perte d'image présente un caractère imprévu.

Enfin, au décodage, pour déterminer par quel entête d'image disponible l'entête d'image de l'image courante peut être remplacé, une comparaison est faite entre le champ identificateur GFID(n) de l'image courante et entre le champ identificateur GFID(n+1) de l'image suivante. Cela implique un retard égal à une image dans le décodage, ce qui est préjudiciable pour des données vidéo dont l'affichage doit être fait en temps réel.

### RESUME DE L'INVENTION

L'invention a pour but de proposer un procédé de codage et de décodage associé permettant, en cas de perte de l'entête d'image dans une image courante, de décoder ladite image courante de façon plus robuste en récupérant les champs de l'entête d'image perdu.

L'invention est tout d'abord remarquable en ce que le procédé de codage comprend des caractéristiques telles que définies dans la revendication 1.

Le remplissage de la valeur des champs identificateurs n'est plus fait de façon relative à la valeur du champ identificateur de l'image précédente. En effet, chaque bit des champs identificateurs sont directement remplis par des caractéristiques de codage propres à l'image à laquelle ils sont associés. Plusieurs caractéristiques de codage sont donc véhiculées par un même champ identificateur.

L'invention est aussi remarquable en ce que le procédé de décodage comprend des caractéristiques telles que définies dans la revendication 2.

En exploitant les propriétés du signal vidéo généré par le procédé de codage selon l'invention, il est ainsi possible, en cas de perte de données lors de la transmission dans ladite image courante, en particulier des données composant l'entête d'image de ladite image courante, de décoder des tranches d'image de ladite image courante non affectées par la perte de données. En effet, en utilisant les règles de codage et la sémantique des valeurs contenues dans chaque champ identificateur GFID, il devient possible de récupérer des informations contenues dans l'entête d'image de ladite image courante nécessaires pour le décodage des tranches d'image de ladite image courante non affectées par la perte de données. Cela présente l'avantage de ne pas obliger le procédé de codage à envoyer systématiquement une image non-prédite au procédé de décodage pour que ce dernier puisse poursuivre sa tâche, et donc de ne pas saturer le canal de transmission. De plus, la sémantique des valeurs définissant chaque champ GFID permet d'améliorer les performances du procédé de décodage en cas de perte de données entraînant des erreurs de décodage irrécupérables.

Le procédé de décodage selon l'invention est mis en oeuvre si le procédé de décodage est en mesure d'interpréter le contenu des champs identificateurs GFID rempli lors du codage du signal vidéo, ce qui est facilement réalisé par l'envoi d'une information propriétaire au procédé de décodage, par exemple au début de la transmission.

L'invention présente l'avantage de rester compatible avec la norme H.263 ce qui permet d'envisager son utilisation même si tous les procédés de décodage selon la norme H.263 ne peuvent interpréter la sémantique du signal vidéo codé généré par le procédé de codage selon l'invention.

Les caractéristiques de codage nécessaires au décodage de l'image courante sont récupérées sur la base d'une comparaison entre les champs identificateurs de l'image courante et de l'image précédemment décodée. Ainsi, aucun retard dans le décodage n'est introduit, ce qui permet d'utiliser ce procédé dans des applications temps réel.

L'invention concerne également un système de codage implémentant les différentes étapes de traitement dudit procédé de codage, et un système de décodage implémentant les différentes étapes de traitement dudit procédé de décodage.

Que ce soit au niveau du codage ou du décodage, les implémentations des procédés de codage et de décodage selon l'invention sont peu coûteuses en termes de ressources, ce qui permet d'envisager une application dans des produits grand public.

L'invention concerne également un système de communication comprenant un système de codage et un système de décodage selon l'invention.

L'invention concerne également un téléphone portable comprenant un système de codage et un système de décodage selon l'invention.

L'invention concerne également un signal vidéo codé généré par ledit procédé de codage selon l'invention.

L'invention concerne également un programme d'ordinateur pour mettre en oeuvre une ou plusieurs étapes dudit procédé de codage ou dudit procédé de décodage.

### BREVE DESCRIPTIONS DES DESSINS

Ces aspects de l'invention ainsi que d'autres aspects plus détaillés apparaîtront plus clairement grâce à la description suivante, faite en regard des dessins ci-annexés, le tout donné à titre d'exemple non limitatif, dans lesquels :
La figure 1 représente les différents types de tranches d'image définis par la norme H.263,
La figure 2 représente les principaux champs contenus dans l'entête d'image de chaque image codée selon le profil de base de la norme H.263,
La figure 3 représente les principaux champs contenus dans l'entête d'image de chaque image codée selon un profil évolué de la norme H.263,
La figure 4 représente les principaux champs contenus dans les entêtes de tranche d'image de type GOB,
La figure 5 représente les principaux champs contenus dans les entêtes de tranche d'image de forme libre ou rectangulaire,
La figure 6 décrit le procédé de décodage selon l'invention,
La figure 7 illustre une première application de l'invention,
La figure 8 illustre une seconde application de l'invention.

### DESCRIPTION DE MODES DE REALISATION DE L'INVENTION

Le procédé de codage selon l'invention consiste en une étape de remplissage des deux bits du champ identificateur GFID de chacune des tranches d'image codée en respectant les règles de codage des champs GFID imposées par la norme H.263, et en associant à chacun de ses bits une sémantique reflétant les caractéristiques de codage utilisées pour le codage des images. Cette étape de remplissage des champs GFID peut s'effectuer lors du codage d'une séquence d'images vidéo non codées, mais peut aussi être effectuée à partir d'un signal vidéo précédemment codé selon la norme H.263 qui doit être transmis sur un canal, en ne modifiant que la valeur des champs GFID.

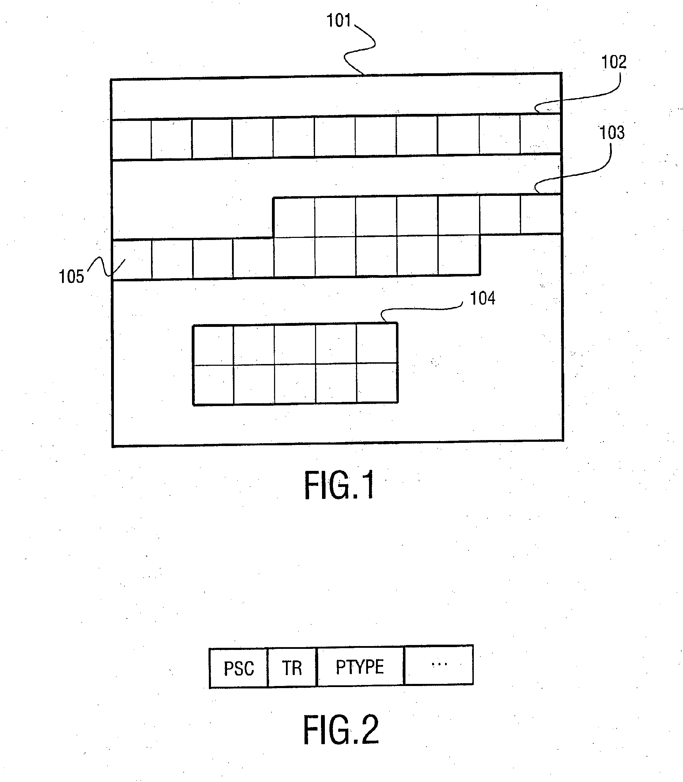

La figure 1 représente les différents types de tranches d'image définis par la norme H.263. A titre d'exemple, il s'agit d'une image 101 de format QCIF dans laquelle des tranches d'image 102-103-104 sont définies, chacune de ces tranches étant composée par un ensemble de macroblocs de taille 16*16, tel que le macrobloc 105.

Les tranches d'image du type GOB sont du type de la tranche 102 correspondant à un groupe de macroblocs de largeur celle de l'image et pour hauteur celle d'un macrobloc (ou de plusieurs macroblocs).

Les tranches d'image du type de la tranche 104 correspondent à un groupe de macroblocs de forme libre définie par des macroblocs assemblés de façon connexe.

Les tranches d'image du type de la tranche 105 correspondent à un groupe de macroblocs de forme rectangulaire et de dimensions paramétrables.

Les formes libres et rectangulaires sont définies lorsque l'annexe K de la norme H.263 est utilisée, par un champ désigné SSS prenant une première valeur pour la forme libre et une seconde valeur pour la forme rectangulaire.

Le découpage en tranches des images permet de coder de façon indépendante chacune des tranches d'une même image.

La figure 2 représente les principaux champs contenus dans l'entête d'image de chaque image codée selon le profil de base de la norme H.263 dans lequel les options de codage ne peuvent pas être utilisées. L'entête d'image comprend notamment :
- le champ PSC qui est un code de début d'image,
- le champ TR qui est une référence temporelle incrémentée d'une image sur l'autre,
- le champ PTYPE qui est un champ renseignant notamment si l'image codée est une image ayant la caractéristique de pouvoir dégeler une image précédemment gelée par le procédé de décodage, ainsi que le format d'image.

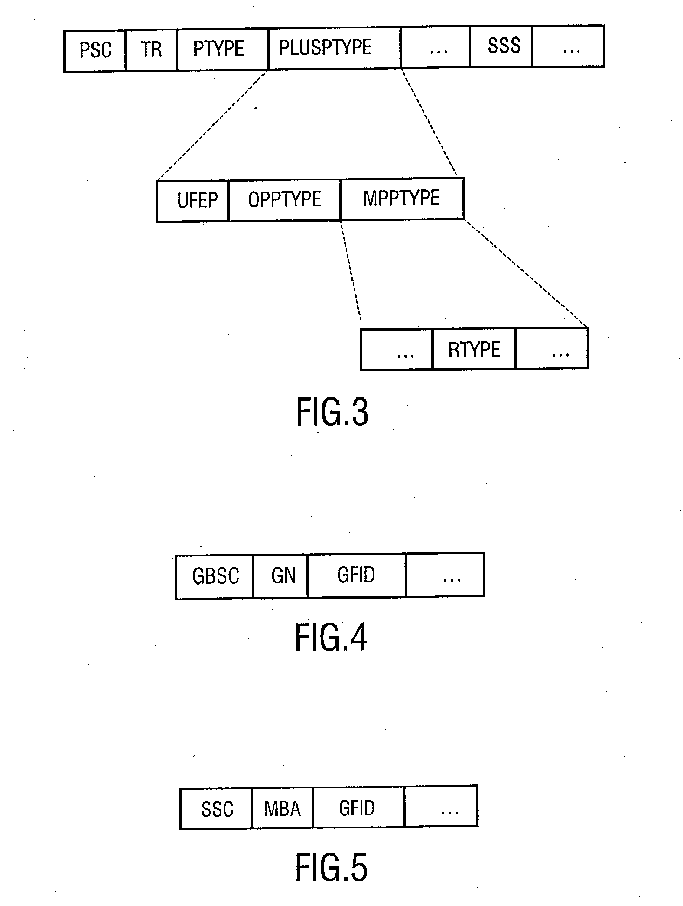

La figure 3 représente les principaux champs contenus dans l'entête d'image de chaque image codée selon un profil évolué de la norme H.263 dans lequel les options de codage peuvent être utilisées, ce qui est détecté par la présence du champ PLUSPTYPE. L'entête d'image comprend les champs décrits à la figure 2, et le champ PLUSPTYPE qui se décompose par les champs suivants :
- le champ UFEP est un code de longueur fixe de 3 bits appartenant au champ PLUSPTYPE et qui est présent seulement si les bits 6-7-8 du champ PTYPE sont mis à "111". Quand UFEP est à "000", il indique que seuls les champs de "PTYPE étendu" qui ont besoin d'être signalés dans chaque entête d'image (MPPTYPE) sont inclus dans l'entête d'image de l'image courante. Quand UFEP est à "001", il indique que les champs de PTYPE étendu sont inclus dans l'entête d'image de l'image courante. Si l'image est de type INTRA ou EI, le champ UFEP est mis à "001". De plus, si PLUSPTYPE est présent de façon continue dans une séquence d'images, ce champ doit être mis à "001" selon une période de 5 secondes ou de 5 images. Plus spécifiquement, ladite période implique que UFEP="001" soit présent dans le champ PLUSPTYPE (si PLUSPTYPE est présent dans chaque image intermédiaire) du premier entête d'image avec une référence temporelle indiquant un intervalle de temps plus grand ou égal à 5 secondes depuis la dernière occurrence de UFEP="001". Les encodeur devraient mettre le champ UFEP à "001" plus souvent dans un contexte sujet aux perturbations des données,
- le champ OPPTYPE qui renseigne notamment sur le format d'image et les options utilisées pour le codage des images,
- le champ MPPTYPE dont le bit 6, appelé RTYPE, renseigne sur le type d'arrondi effectué lors d'une interpolation bilinéaire permettant de calculer une valeur au demi-pixel.

La figure 4 représente les principaux champs contenus dans les entêtes de tranche d'image de type GOB, de chaque image codée. L'entête de tranche d'image comprend notamment :
- le champ GBSC qui est un code de début de tranche d'image,
- le champ GN qui indique le numéro du premier GOB de la tranche dans l'image,
- le champ identificateur GFID.

La figure 5 représente les principaux champs contenus dans les entêtes de tranche d'image de forme libre ou rectangulaire, de chaque image codée. L'entête de tranche d'image comprend notamment :
- le champ SSC qui est un code de début de tranche d'image,
- le champ MBA qui indique l'adresse du premier macrobloc dans la tranche,
- le champ identificateur GFID.

Afin de vérifier les règles syntaxiques de remplissage des champs identificateurs GFID stipulées par la norme H.263, et donc délivrer un signal vidéo codé compatible avec la norme H.263, la valeur des bits 1 et 2 des champs GFID doit satisfaire certaines contraintes.

En effet, la valeur des champs GFID doit être identique dans chaque entête de groupe de blocs (si présent) ou chaque entête de tranche d'image, dans une même image codée. De plus, si le champ PTYPE dans l'entête d'image d'une image courante est le même que dans l'entête d'image de l'image précédemment codée, la valeur de GFID doit être identique dans ces deux images, dans la mesure où le champ PLUSPTYPE n'est pas utilisé. Cependant, si le champ PTYPE dans l'entête d'image d'une image courante donnée diffère du champ PTYPE de l'image précédemment codée, la valeur de GFID de ladite image courante doit être différente de la valeur de GFID de ladite image précédemment codée. Dans la mesure où le champ PLUSPTYPE est présent, la valeur de GFID de l'image courante doit être la même que dans l'image précédemment codée, si la valeur des champs (PTYPE, PLUSPTYPE, CPFMT, EPAR, CPCFC, SSS, ELNUM, RLNUM, UUI, RPSMF, RPRP tels que définis par la norme H.263) reste la même que dans l'image précédemment codée, sinon, la valeur de GFID doit différer de celle de ladite image précédemment codée.

Le procédé de codage selon l'invention envisage deux modes de remplissage des champs GFID :
- un premier mode (mode 1) lorsque le format des images codées selon la norme H.263 ne change pas d'une image à l'autre,
- un deuxième mode (mode 2) lorsque le format des images codées selon la norme H.263 est susceptible de passer d'un premier format à un deuxième format entre deux images codées consécutives.

Le tableau 1 résume par quelles informations les deux bits 1 et 2 du champ GFID sont remplis dans le cas où le format d'image ne change pas d'une image à l'autre. Dans ce cas, ce mode de remplissage est appelé mode 1.

**Tableau 1 : Remplissage des bits 1 et 2 du champ GFID dans le cas où le format d'image ne change pas d'une image à l'autre.**

| | **mode 1** |
|---|---|
| **bit 1 de GFID** | Type d'image |
| **bit 2 de GFID** | Type d'arrondi (pour les images prédites) |
| | X (pour les images non-prédites) |

Le mode 1 est défini par :
- **mode 1** :
   i) le bit 1 reflète le type de l'image à laquelle appartient le champ GFID à remplir. Par exemple, le bit 1 peut être mis à "1" pour les images codées non-prédites (désignées aussi images INTRA ou I), et à "0" pour les images codées prédites (désignées aussi images INTER ou P),
   ii) pour les images prédites, le bit 2 reflète le type d'arrondi effectué lors d'une interpolation bilinéaire permettant de calculer une valeur au demi-pixel. Ce bit prend la valeur du champ RTYPE présent dans l'entête de l'image à laquelle appartient le champ GFID à remplir. De façon avantageuse, la valeur de RTYPE est changée entre deux images prédites consécutives afin d'éviter des dérives d'arrondis, et aussi pour savoir si un nombre impair d'images prédites ont été perdues pendant la transmission. De plus, pour une image prédite courante qui succède à une ou plusieurs images non-prédites, le champ RTYPE de ladite image courante prend la valeur du champ RTYPE de la dernière image prédite précédent lesdites images non-prédites, afin de savoir si un nombre impair d'images non prédites ont été perdues pendant la transmission.
   iii) pour les images non-prédites, le bit 2 est systématiquement mis à "0", ou systématiquement mis à "1". Sa valeur est notée X dans le tableau 1.

Un exemple de remplissage des bits 1 et 2 du champ GFID selon le mode 1 est donné par le tableau 2 pour un signal vidéo codé comprenant 22 images consécutives.

**Tableau 2 :**

| Exemple de remplissage des bits 1 et 2 du champ GFID selon le mode 1. | | | | | | | | | | | | | | | | | | | | | | |
|---|---|---|---|---|---|---|---|---|---|---|---|---|---|---|---|---|---|---|---|---|---|---|
| **rang d'image** | 1 | **2** | 3 | 4 | 5 | 6 | **7** | 8 | 9 | 10 | 11 | 12 | 13 | 14 | 15 | **16** | **17** | 18 | 19 | **20** | **21** | 22 |
| **type d'image** | P | **I** | P | P | P | P | **I** | P | P | P | P | P | P | P | P | **I** | **I** | P | P | **I** | **I** | P |
| **bit 1 de GFID** | 0 | **1** | 0 | 0 | 0 | 0 | **1** | 0 | 0 | 0 | 0 | 0 | 0 | 0 | 0 | **1** | **1** | 0 | 0 | **1** | **1** | 0 |
| **bit 2 de GFID** | 0 | **X** | 0 | 1 | 0 | 1 | **X** | 1 | 0 | 1 | 0 | 1 | 0 | 1 | 0 | **X** | **X** | 0 | 1 | **X** | **X** | 1 |

Dans le cadre de l'invention et afin de satisfaire aussi les règles syntaxiques imposées par la norme H.263 sur le remplissage des bits 1 et 2 des champs GFID, il est convenu que, pour le mode 1 :
- les options éventuellement utilisées par cette norme ne doivent pas être changées au cours du codage du signal vidéo,
- la valeur des champs OPPTYPE, si présents, ne doit pas être modifiée d'une image à l'autre,
- la valeur des champs SSS, présents si l'annexe K relative au découpage en tranches des images à coder est utilisée, ne doit pas être changée au cours du codage d'une image à l'autre,
- dans le cas où on a deux images non prédites consécutives, les bits 3-4-5 ne doivent pas changer.

Le tableau 3 résume par quelles informations les deux bits 1 et 2 du champ GFID sont remplis dans le cas où le format d'image est susceptible de changer d'une image à l'autre. Dans ce cas, ce mode de remplissage est appelé mode 2.

**Tableau 3 : Remplissage des bits 1 et 2 du champ GFID dans le cas où le format d'image est susceptible de changer d'une image à l'autre.**

| | **mode 2** |
|---|---|
| **bit 1 de GFID** | Type d'image |
| **bit 2 de GFID** | Format d'image |

Le mode 2 est défini par :
- **mode 2** :
   i) le bit 1 reflète le type de l'image à laquelle appartient le champ GFID à remplir. Par exemple, le bit 1 peut être mis à "1" pour les images codées non-prédites (désignées aussi images INTRA ou I), et à "0" pour les images codées prédites (désignées aussi images INTER ou P). Le bit 1 est donc défini de façon identique au mode 1 i),
   ii) le bit 2 reflète le format de l'image codée à laquelle appartient le champ GFID à remplir, notamment si le format de l'image est au format QCIF (noté Q) ou SQCIF (noté S). Par exemple, ce bit peut être mis à "0" pour les images de format SQCIF et à "1" pour les images de format QCIF, le format d'image étant défini par les bits 6-7-8 du champ PTYPE, ou par les bits 1-2-3 du champ OPPTYPE.

Un exemple de remplissage des bits 1 et 2 du champ GFID selon le **mode 2** est donné par le tableau 4 pour un signal vidéo codé comprenant 22 images consécutives.

**Tableau 4 :**

| Exemple de remplissage des bits 1 et 2 du champ GFID selon le **mode 2.** | | | | | | | | | | | | | | | | | | | | | | |
|---|---|---|---|---|---|---|---|---|---|---|---|---|---|---|---|---|---|---|---|---|---|---|
| **rang d'image** | 1 | **2** | 3 | 4 | 5 | 6 | **7** | 8 | 9 | 10 | 11 | 12 | 13 | 14 | 15 | **16** | 17 | 18 | 19 | **20** | 21 | 22 |
| **type d'image** | P | **I** | P | P | P | P | **I** | P | P | P | P | P | P | P | P | **I** | P | P | P | **I** | P | P |
| **format d'image** | Q | **Q** | Q | Q | Q | Q | **S** | S | S | S | S | S | S | S | S | **Q** | Q | Q | Q | **Q** | Q | Q |
| **bit 1 de GFID** | 0 | **1** | 0 | 0 | 0 | 0 | **1** | 0 | 0 | 0 | 0 | 0 | 0 | 0 | 0 | **1** | 0 | 0 | 0 | **1** | 0 | 0 |
| **bit 2 de GFID** | 1 | **1** | 1 | 1 | 1 | 1 | **0** | 0 | 0 | 0 | 0 | 0 | 0 | 0 | 0 | **1** | 1 | 1 | 1 | **1** | 1 | 1 |

De plus, pour que le **mode 2** respecte les règles syntaxiques imposées par la norme H.263 sur le remplissage des bits 1 et 2 des champs GFID :
- les options éventuellement utilisées par cette norme ne doivent pas être changées au cours du codage du signal vidéo,
- la valeur des champs SSS, présents si l'annexe K relative au découpage en tranches des images à coder est utilisée, ne doit pas être changée au cours du codage d'une image à l'autre,
- entre deux images prédites consécutives d'une part, et entre deux images non-prédites consécutives de même format d'autre part, la valeur des bits 3-4-5 des champs PTYPE ne doit pas être changée au cours du codage du signal vidéo,
- si les champs PLUSPTYPE sont utilisés, la valeur des champs UFEP et RTYPE ne doit pas être changée entre deux images consécutives de même type.

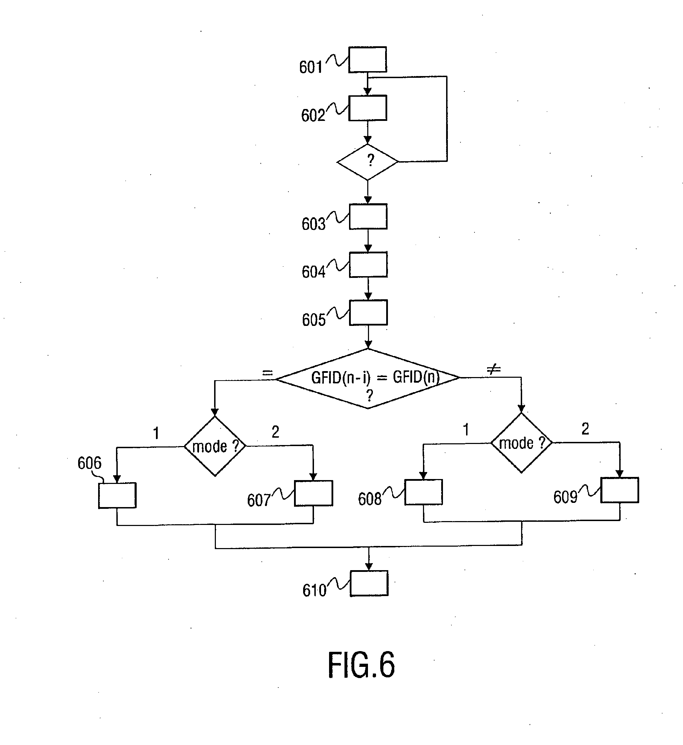

La figure 6 décrit le procédé de décodage selon l'invention permettant, en cas de perte de données dans une image, dite image courante, de décoder des tranches d'image de ladite image courante non affectées par la perte de données, même si l'entête d'image de ladite image courante a été perdue lors de la transmission. Le procédé de décodage reçoit un signal vidéo codé selon la norme H.263 dans lequel les champs GFID on été remplis selon le procédé de codage décrit précédemment.

Par convention, dans la suite de la description, les indices n et i permettent de situer temporellement les images codées. Les notations suivantes seront utilisées :
**Ima(n) :** image codée de rang n (i.e. image courante),
**Ima(n-i) :** image codée de rang (n-i), avec i entier et i > 0,
**GFID(n) :** valeur du champ GFID pour l'image Ima(n),
**GFID(n-i) :** valeur du champ GFID pour l'image Ima(n-i),
**image_header(n) :** entête d'image de Ima(n),
**slice_header(n) :** entête d'une tranche d'image de Ima(n).

Ce procédé comprend une étape 601 de détection et d'initialisation pour d'une part détecter selon quel mode les champs identificateurs GFID ont été remplis, et d'autre part initialiser des paramètres du procédé de décodage pour que l'interprétation des bits 1 et 2 des champs GFID soit concordante avec celle du procédé de codage. Cette étape 601 est faite de préférence au début de l'envoi du signal vidéo par le procédé de codage, suite à l'envoi d'une information propriétaire du procédé de codage au procédé de décodage reflétant le mode de remplissage utilisé. Dans le cas où un seul mode est envisagé, cette étape d'initialisation n'est pas effectuée et le procédé prend des valeurs par défaut correspondant à ce mode. Dans une autre variante de l'invention, afin de permettre un changement de mode au cours de la communication entre le procédé de codage et le procédé de décodage, un nouveau signal propriétaire reflétant la valeur dudit nouveau mode est envoyé au procédé de décodage pour que ce dernier soit en mesure d'interpréter correctement les champs GFID.

En permanence, le signal vidéo codé est scruté par une étape de scrutation 602 afin de repérer dans la syntaxe du signal vidéo codé la présence des champs GFID. Lorsqu'un champ GFID est repéré, sa valeur est mémorisée par une étape de mémorisation 603, ainsi que la valeur des champs de l'entête d'image de l'image à laquelle ledit champ GFID appartient. Dans la mesure où les champs GFID sont toujours identiques pour une même image, la mémorisation d'une seule valeur de GFID par image suffit, quelque soit le nombre de tranches d'image par image codée. Ledit champ GFID et ledit entête d'image mémorisés sont extraits d'une image codée de rang (n-i) qui n'a de préférence été nullement affectée par une perte de données, et qui se situe chronologiquement avant ladite image courante. Il s'agit donc du champ identificateur GFID(n-i) et l'entête d'image image_header(n-i) appartenant à l'image Ima(n-i) qui sont mémorisés.

En cas de perte partielle ou totale des données qui affecte les images codées de rang supérieur à (n-i), ainsi que l'entête d'image de l'image Ima(n), le procédé de décodage comprend une étape de re-synchronisation 604 pour re-synchroniser le procédé de décodage sur un entête de tranche d'image, dit tranche de re-synchronisation, cette re-synchronisation survenant dans ladite image courante Ima(n) à décoder. Pour effectuer la re-synchronisation, les données qui composent l'image codée Ima(n) sont analysées jusqu'à repérer dans la syntaxe de codage un code (GBSC ou SSC) indiquant le début d'une tranche d'image n'ayant pas été affectée par la perte de données. Ladite tranche de re-synchronisation comporte l'entête de tranche slice_header(n) qui comprend elle-même en particulier le champ GFID(n).

Une étape de comparaison 605 effectue la comparaison entre les valeurs de GFID(n) et GFID(n-i).

Dans le cas où GFID(n) = GFID(n-i), le procédé de décodage se scinde en deux branches, suivant le mode selon lequel les champs GFID ont été remplis. Chacune des branches du procédé permet de déterminer les paramètres de décodage, normalement présents dans l'entête image_header(n) si cet entête n'avait pas été perdu, nécessaires pour décoder les tranches d'image de Ima(n) non affectées par la perte de données, ou bien optimiser les performances de décodage du signal vidéo codé :
1) **mode 1 :** Deux cas sont à considérer suivant les types de Ima(n-i) et Ima(n), les types d'image étant donnés par la valeur des bits 1 des champs GFID(n-i) et GFID(n).
   a) Ima(n) et Ima(n-i) sont de type non prédit : L'étape 606 permet de déterminer les paramètres de décodage des tranches d'image de Ima(n) en reprenant les champs contenus dans le champ PTYPE (et PLUSPTYPE si utilisé) de l'entête image_header(n-i).
   b) Ima(n) et Ima(n-i) sont de type prédit : L'étape 606 permet de déterminer les paramètres de décodage des tranches d'image de Ima(n) en reprenant les champs contenus dans le champ PTYPE (et PLUSPTYPE si utilisé) de l'entête image_header(n-i), sauf que la valeur du champ RTYPE pour Ima(n) est celle du bit 2 de GFID(n), et que l'hypothèse selon laquelle la valeur des bits 3-4-5 du champ PTYPE de Ima(n-i) reste identique dans Ima(n) doit être faite.
2) **mode 2** : Deux cas sont à considérer suivant les types de Ima(n-i) et Ima(n), les types d'image étant donnés par la valeur des bits 1 des champs GFID(n-i) et GFID(n).
   a) Ima(n) et Ima(n-i) sont de type non prédit : L'étape 607 permet de déterminer les paramètres de décodage des tranches d'image de Ima(n) en reprenant les champs contenus dans le champ PTYPE (et PLUSPTYPE si utilisé) de l'entête image_header(n-i).
   b) Ima(n) et Ima(n-i) sont de type prédit : idem 2) a), c'est à dire que l'étape 607 permet de déterminer les paramètres de décodage des tranches d'image de Ima(n) en reprenant les champs contenus dans le champ PTYPE (et PLUSPTYPE si utilisé) de l'entête image_header(n-i), avec en plus le champ RTYPE qui doit être fixé par le procédé de décodage à une valeur arbitraire.

Dans le cas où GFID(n) ≠ GFID(n-i), le procédé de décodage se scinde en deux branches, suivant le mode selon lequel les champs GFID ont été remplis. Chacune des branches du procédé permet de déterminer les paramètres de décodage, normalement présents dans l'entête image_header(n) si cet entête n'avait pas été perdu, nécessaires pour décoder les tranches d'image de Ima(n) non affectées par la perte de données, ou bien optimiser les performances de décodage du signal vidéo codé :
3) **mode 1 :** Trois cas sont à considérer suivant les types de Ima(n-i) et Ima(n), les types d'image étant donnés par la valeur des bits 1 des champs GFID(n-i) et GFID(n).
   a) Ima(n) et Ima(n-i) sont de type prédit : L'étape 608 permet de déterminer les paramètres de décodage des tranches d'image de Ima(n) en reprenant les champs contenus dans le champ PTYPE (et PLUSPTYPE si utilisé) de l'entête image_header(n-i), sauf que la valeur du champ RTYPE pour Ima(n) est celle du bit 2 de GFID(n). Cependant, l'hypothèse selon laquelle la valeur des bits 3-4-5 du champ PTYPE de Ima(n-i) reste identique dans Ima(n) doit être faite.
   b) Ima(n) est de type prédit et Ima(n-i) est de type non prédit : idem 3) a), c'est à dire l'étape 608 permet de déterminer les paramètres de décodage des tranches d'image de Ima(n) en reprenant les champs contenus dans le champ PTYPE (et PLUSPTYPE si utilisé) de l'entête image_header(n-i), sauf que la valeur du champ RTYPE pour Ima(n) est celle du bit 2 de GFID(n). Cependant, l'hypothèse selon laquelle la valeur des bits 3-4-5 du champ PTYPE de Ima(n-i) reste identique dans Ima(n) doit être faite.
   c) Ima(n) est de type non prédit et Ima(n-i) est de type prédit : l'étape 608 permet de déterminer les paramètres de décodage des tranches d'image de Ima(n) en reprenant les champs contenus dans le champ PTYPE (et PLUSPTYPE si utilisé) de l'entête image_header(n-i). Cependant, l'hypothèse selon laquelle la valeur des bits 3-4-5 du champ PTYPE de Ima(n-i) reste identique dans Ima(n) doit être faite. Le bit 2 de GFID(n) ne doit pas être pris en considération.
4) **mode 2** : Quatre cas sont à considérer suivant les types de Ima(n-i) et Ima(n), les types d'image étant donnés par la valeur des bits 1 des champs GFID(n-i) et GFID(n).
   a) Ima(n) et Ima(n-i) sont de type prédit : L'étape 609 ne permet pas de déterminer les paramètres de décodage des tranches d'image de Ima(n) en reprenant les champs contenus dans le champ PTYPE (et PLUSPTYPE si utilisé) de l'entête image_header(n-i). En effet, ce cas signifie non seulement qu'une image non prédite a été perdue entre Ima(n) et Ima(n-i), mais aussi que le format a changé, empêchant le décodage de Ima(n). Ce cas correspond à une perte irrémédiable des données. Par contre, la détection de ce cas est utilisée de façon avantageuse pour déclencher rapidement une requête par le procédé de décodage pour demander au procédé de codage l'envoi d'une image non prédite de rafraîchissement.
   b) Ima(n) et Ima(n-i) sont de type non prédit : Ce cas signifie que le format a changé. L'étape 609 permet de déterminer les paramètres de décodage des tranches d'image de Ima(n) en reprenant les champs contenus dans le champ PTYPE (et PLUSPTYPE si utilisé) de l'entête image_header(n-i), sauf que le format utilisé pour le décodage des tranches de Ima(n) est déduit de la valeur du bit 2 de GFID(n).
   c) Ima(n) est de type prédit et Ima(n-i) est de type non prédit : Si les bits 2 de GFID(n) et GFID(n-i) sont différents, on se retrouve dans la situation 4) a). Par contre, si les bits 2 de GFID(n) et GFID(n-i) sont identiques, on se retrouve dans la situation 3) a).
   d) Ima(n) est de type non prédit et Ima(n-i) est de type prédit : Si les bits 2 de GFID(n) et GFID(n-i) sont différents, cela signifie un changement de format. L'étape 609 permet de déterminer les paramètres de décodage des tranches d'image de Ima(n) en reprenant les champs contenus dans le champ PTYPE (et PLUSPTYPE si utilisé) de l'entête image_header(n-i), sauf que le format utilisé pour le décodage des tranches de Ima(n) est déduit de la valeur du bit 2 de GFID(n). Si les bits 2 de GFID(n) et GFID(n-i) sont identiques, l'étape 609 permet de déterminer les paramètres de décodage des tranches d'image de Ima(n) en reprenant les champs contenus dans le champ PTYPE (et PLUSPTYPE si utilisé) de l'entête image_header(n-i).

Ainsi, il est possible d'extraire du champ PTYPE (et PLUSPTYPE si utilisé) de l'entête image_header(n-i) mémorisé, des champs nécessaires pour le décodage de ladite tranche de re-synchronisation et des tranches d'image suivantes appartenant à Ima(n). Bien sûr, le décodage des dites tranches d'image suivantes est possible dans la mesure où elles ne sont pas elle-même affectées par une perte de données, auquel cas le procédé de décodage recommencerait le processus à partir de l'étape 602. En d'autres termes, en plus de l'information quant au type de l'image courante portée par le bit 1 de GFID(n), au format de l'image courante ou du type d'arrondi portées par le bit 2 de GFID(n), les autres caractéristiques de codage de l'image courante Ima(n) nécessaires à son décodage, en particulier de connaître les champs renseignant sur les options de codage de la norme H.263 utilisées lors du codage du signal vidéo, sont extraites de l'entête d'image de l'image Ima(n-i).

Il apparaît au vu des différents cas possibles selon les modes 1 et 2 décrits précédemment, que les caractéristiques de codage de l'image précédemment décodée peuvent être utilisées pour le décodage de l'image courante si la comparaison 605 des identificateurs ne révèle pas :
- que ladite image précédemment décodée et ladite image courante sont de type prédit, et qu'elles sont de formats différents,
- ou que ladite image précédemment décodée est de type non prédit et ladite image courante est de type prédit, et qu'elles sont de formats différents.
En effet, il est seulement possible de décoder une image courante de type prédit seulement si cette dernière peut s'appuyer sur une image précédemment décodée de même format. Il est rappelé que le passage d'un premier format à un second format peut se faire notamment par l'envoi d'une image non prédite ayant pour format ledit second format.
Par contre, si l'étape de comparaison 605 des identificateurs révèle :
- que ladite image précédemment décodée et ladite image courante sont de type prédit, et qu'elles sont de formats différents,
- ou que ladite image précédemment décodée est de type non prédit et ladite image courante est de type prédit, et qu'elles sont de formats différents.
Dans ce cas, le procédé de décodage peut de façon avantageuse demander une image de type non prédit au procédé de codage avant même que le procédé de décodage n'essaie de décoder l'image courante.

Dans un dernier temps, après la détermination des paramètres de décodage selon l'une des étapes 606-607-608-609, l'étape de décodage 610 décode les tranches de l'image courante Ima(n) suivant le procédé de décodage de la norme H.263, en utilisant lesdits paramètres de décodage.

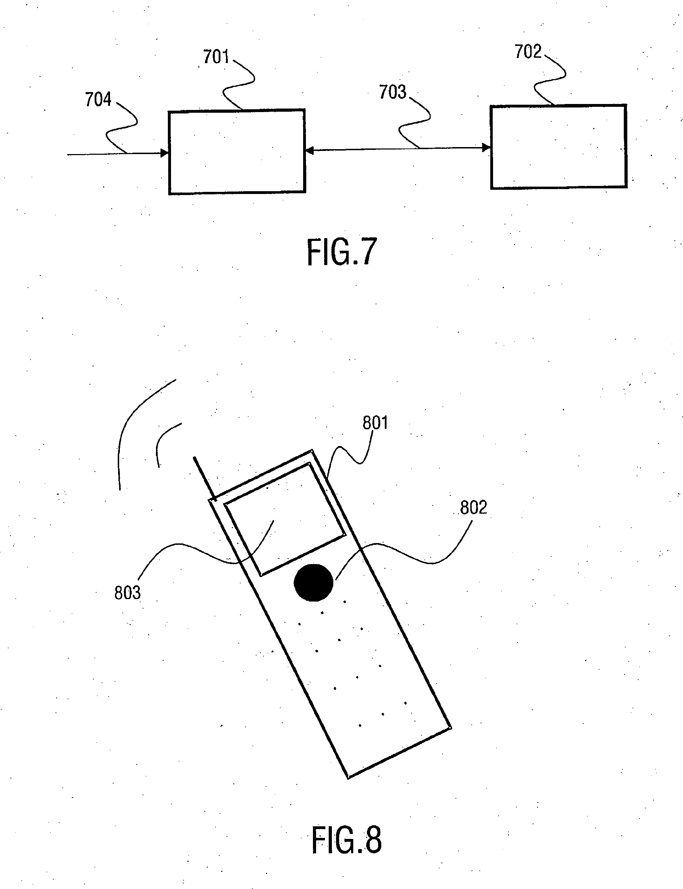

La figure 7 illustre de façon schématique une première application de l'invention qui est un système de communication qui comprend un système de codage 701 et un système de décodage 702 échangeant des données via le canal de transmission 703, par exemple du type sans fils ou filaire.

Le système de codage 701 comporte des moyens de codage permettant de mettre en oeuvre le procédé de codage selon l'invention décrit précédemment, sur les images du signal d'entrée vidéo 704, le signal vidéo 704 étant soit un signal vidéo précédemment codé selon la norme H.263, ou bien un signal vidéo original non codé. Dans ce dernier cas, le système de codage comporte un codeur selon la norme H.263 fonctionnant simultanément avec des moyens mettant en oeuvre le procédé de codage selon l'invention. Le système de codage délivre ainsi sur le canal 703 un signal vidéo codé selon la norme H.263 dont les champs GFID de chaque tranche d'image codée sont remplis selon ledit procédé de codage. Après réception dudit signal vidéo codé, et en cas de perte de données sur le canal de transmission 703 conduisant à la perte de l'entête d'image d'une image courante, le récepteur, comportant des moyens pour mettre en oeuvre le procédé de décodage selon l'invention, permet la récupération des caractéristiques de codage perdues pour que les tranches d'image de la dite image courante non affectées par la perte de données puissent être décodées par un décodeur selon la norme H.263 implémenté dans ledit système de décodage.

Concernant les moyens mis en oeuvre d'un tel procédé de codage et de décodage, il sera notamment fait appel tant au niveau du système de codage que du système de décodage à des processeurs de signaux, ces dits processeurs effectuant les différentes étapes de traitement décrites précédemment sur les signaux vidéo en exécutant des jeux d'instructions stockés dans une mémoire.

La figure 8 illustre une seconde application de l'invention dans laquelle le procédé de codage et le procédé de décodage sont implémentés dans un téléphone portable 801 ayant la possibilité de fonctionner soit en émission soit en réception avec un téléphone du même type. Ce téléphone intègre une caméra 802 délivrant un signal vidéo original non codé permettant par exemple de filmer la personne en possession dudit téléphone. Ce téléphone comporte un codeur selon la norme H.263 fonctionnant simultanément avec les moyens de codage selon l'invention, afin de délivrer un signal vidéo codé dont les champs GFID reflètent les caractéristiques du procédé de codage selon l'invention.

Lorsque ce téléphone fonctionne en réception, après réception d'un signal vidéo codé généré et transmis par un téléphone selon l'invention fonctionnant en émission, et en cas de perte de données lors de la transmission conduisant à la perte de l'entête d'image d'une image courante, les tranches d'image de la dite image courante non affectées par la perte de données sont décodées par un décodeur selon la norme H.263, en utilisant les caractéristiques de codage perdues et récupérées par le procédé de décodage selon l'invention. Les images décodées sont affichées sur l'écran 803.

De façon avantageuse, ce type de téléphone est utilisé dans le contexte d'une transmission de données notamment de type vidéo encodé selon la norme H.263, sur un réseau de transmission de type UMTS.

## Revendications

1. Procédé de codage pour coder une séquence d'images et délivrer une séquence d'images codées, chaque image codée comprenant un entête d'image identifiant des caractéristiques de codage appliquées au codage de l'image, l'image codée étant découpée en tranches comprenant un entête de tranche, chaque entête de tranche comprenant un champ identificateur , les champs identificateurs étant identiques pour les tranches d'une même image codée, l'identité des entêtes d'images d'une image codée courante et d'une image codée précédente dans la séquence d'images codées entraînant l'identité des champs identificateurs desdites images codées courante et précédente, un changement dans l'entête d'image d'une image codée courante par rapport à celui d'une image codée précédente dans la séquence d'images codées entraînant le changement des champs identificateurs de ladite image courante par rapport à ladite image précédente, procédé **caractérisé en ce qu'**il comprend une étape de remplissage pour remplir chaque bit des champs identificateurs par une valeur identifiant directement une caractéristique de codage de l'image codée à laquelle lesdits champs identificateurs sont associés, en sorte de permettre le décodage d'au moins une tranche d'une image codée en cas de perte de données de ladite image codée n'affectant pas ladite tranche.

2. Procédé de décodage pour décoder une image codée courante faisant partie d'une séquence d'images codées, chaque image codée comprenant un entête d'image identifiant des caractéristiques de codage appliquées au codage de l'image, chaque image codée étant découpée en tranches comprenant un entête de tranche, chaque entête de tranche comprenant un champ identificateur, chaque bit des champs identificateurs identifiant directement une caractéristique de codage de l'image codée à laquelle lesdits champs identificateurs sont associés, procédé **caractérisé en ce qu'**il comprend :
une étape de re-synchronisation en cas de perte partielle ou totale des données qui affecte les images codées de rang supérieur à une image précédemment décodée, pour re-synchroniser le procédé de décodage sur un entête de tranche d'image, l'étape de synchronisation comprenant une analyse des données qui composent l'image codée courante jusqu'à repérer un code indiquant le début d'une tranche d'image n'ayant pas été affectée par la perte de données,
une étape de comparaison pour comparer le champ identificateur de l'image précédemment décodée avec le champ identificateur de l'image codée courante,
une étape de décodage pour décoder la tranche d'image de l'image codée courante n'ayant pas été affectée par la perte de données, en utilisant d'une part les caractéristiques de codage identifiées par le champ identificateur de la tranche d'image de l'image codée courante n'ayant pas été affectée par la perte de données, et en utilisant d'autre part les caractéristiques de codage identifiées par l'entête d'image de l'image précédemment décodée si la comparaison desdits champs identificateurs ne révèle pas :
i) que l'image précédemment décodée et ladite image codée courante sont de type prédit, et qu'elles sont de formats différents,
j) ou que l'image précédemment décodée est de type non prédit et ladite image codée courante est de type prédit, et qu'elles sont de formats différents.

3. Procédé selon la revendication 1 ou 2 où un premier bit des champs identificateurs reflète le type d'image des images codées, et un deuxième bit reflète le type d'arrondi utilisé pour le codage des images.

4. Procédé selon la revendication 1 ou 2 où un premier bit des champs identificateurs reflète le type d'image des images codées, et un deuxième bit reflète le format d'image des images codées.

5. Système de codage pour coder une séquence d'images afin d'obtenir une séquence d'images codées, chaque image codée comprenant un entête d'image identifiant des caractéristiques de codage appliquées au codage de l'image, l'image codée étant découpée en tranches comprenant un entête de tranche, chaque entête de tranche comprenant un champ identificateur, les champs identificateurs étant identiques pour les tranches d'une même image codée, l'identité des entêtes d'images d'une image codée courante et d'une image codée précédente dans la séquence d'images codées entraînant l'identité des champs identificateurs desdites images codées courantes et précédentes, un changement dans l'entête d'image d'une image codée courante par rapport à celui d'une image codée précédente dans la séquence d'images codées entraînant le changement des champs identificateurs de ladite image courante par rapport à ladite image précédente, système **caractérisé en ce qu'**il comprend des moyens de remplissage pour remplir chaque bit des champs identificateurs par une valeur identifiant directement une caractéristique de codage variable de l'image codée à laquelle lesdits champs identificateurs sont associés, en sorte de permettre le décodage d'au moins une tranche d'une image codée en cas de perte de données de ladite image codée n'affectant pas ladite tranche.

6. Système de décodage pour décoder une image codée courante faisant partie d'une séquence d'images codées, chaque image codée comprenant un entête d'image identifiant des caractéristiques de codage appliquées au codage de l'image, chaque image codée étant découpée en tranches comprenant un entête de tranche, chaque entête de tranche comprenant un champ identificateur, chaque bit des champs identificateurs identifiant directement une caractéristique de codage de l'image codée, système **caractérisé en ce qu'**il comprend :
des moyens de re-synchronisation en cas de perte partielle ou totale des données qui affecte les images codées de rang supérieur à une image précédemment décodée, pour re-synchroniser le procédé de décodage sur un entête de tranche d'image, l'étape de synchronisation comprenant une analyse des données qui composent l'image codée courante jusqu'à repérer un code indiquant le début d'une tranche d'image n'ayant pas été affectée par la perte de données,
des moyens de comparaison pour comparer le champ identificateur de l'image précédemment décodée avec le champ identificateur de l'image codée courante,
des moyens de décodage pour décoder la tranche d'image de l'image codée courante n'ayant pas été affectée par la perte de données en utilisant d'une part les caractéristiques de codage identifiées par le champ identificateur de la tranche d'image de l'image codée courante n'ayant pas été affectée par la perte de données et en utilisant d'autre part les caractéristiques de codage identifiées par l'entête d'image de l'image précédemment décodée si la comparaison desdits champs identificateurs ne révèle pas :
i) que l'image précédemment décodée et ladite image codée courante sont de type prédit, et qu'elles sont de formats différents,
j) ou que l'image précédemment décodée est de type non prédit et ladite image codée courante est de type prédit, et qu'elles sont de formats différents.

7. Système de communication comprenant un système de codage selon la revendication 5 et un système de décodage selon la revendication 6.

8. Téléphone portable comprenant un système de codage selon la revendication 5 et un système de décodage selon la revendication 6.

9. Signal vidéo définissant une séquence d'images codées obtenue par codage d'une séquence d'images, chaque image codée comprenant un entête d'image identifiant des caractéristiques de codage appliquées au codage de l'image, l'image codée étant découpée en tranches, chaque tranche d'image comprenant un champ identificateur rempli par des valeurs identifiant directement des caractéristiques de codage variables de ladite image codée, un champ identificateur étant identique pour les tranches d'une même image, une identité des caractéristiques de codage d'une image codée courante et précédente entraînant l'identité des champs identificateurs de ces deux images, un changement des caractéristiques de codage d'une image codée courante par rapport à celles d'une image précédente entraînant le changement des champs identificateurs de ladite image courante, une première valeur des champs identificateurs identifiant de façon absolue le type de l'image codée, une seconde valeur des champs identificateurs identifiant de façon absolue le format de l'image codée ou bien le type d'arrondi, les autres caractéristiques de codage étant fixes.

10. Programme d'ordinateur comportant des instructions de code de programme pour mettre en oeuvre un procédé selon l'une des revendications 1 à 4.

## Patentansprüche

1. Codierungsverfahren zur Codierung einer Bildfolge und Lieferung einer Folge codierter Bilder, jedes codierte Bild umfassend eine Bildkopfzeile zur Identifizierung der angewendeten Codiereigenschaften zur Codierung des Bilds, wobei das codierte Bild in Abschnitte umfassend eine Abschnittskopfzeile aufgeteilt wird, und jede Abschnittskopfzeile ein Identifizierungsfeld umfasst, wobei die Identifizierungsfelder für die Abschnitte eines einzelnen codierten Bilds identisch sind, die Identität der Bildkopfzeilen eines aktuell codierten Bilds und eines vorherig codierten Bilds in der Bildfolge die Identität der Identifizierungsfelder der aktuell und vorherig codierten Bilder enthält, eine Änderung in der Bildkopfzeile eines aktuell codierten Bilds zu der eines vorherig codierten Bilds in der codierten Bildfolge zur Änderung der Identifizierungsfelder des aktuellen Bilds in Bezug auf das vorherige Bild führt, wobei das Verfahren **dadurch gekennzeichnet ist, dass** es ein Füllphase umfasst, um jedes Bit der Identifizierungsfelder mit einem Wert zu füllen, der direkt eine Codiereigenschaft des codierten Bilds identifiziert, mit dem die Identifizierungsfelder verbunden sind, derart, dass die Decodierung mindestens eines Abschnitts eines codierten Bilds bei einem Datenverlust des codierten Bilds möglich ist, der nicht diesen Abschnitt betrifft.

2. Decodierungsverfahren zur Decodierung eines aktuellen codierten Bilds, das Teil einer Folge codierter Bilder ist, jedes codierte Bild umfassend eine Bildkopfzeile zur Identifizierung der angewendeten Codiereigenschaften zur Codierung des Bilds, wobei jedes codierte Bild in Abschnitte unterteilt ist, umfassend eine Abschnittskopfzeile, jede Abschnittskopfzeile umfassend ein Identifizierungsfeld, und jedes Bit der Identifizierungsfelder direkt eine Codiereigenschaft des codierten Bilds identifiziert, mit dem diese Identifizierungsfelder verbunden sind, wobei das Verfahren **dadurch gekennzeichnet ist, dass** es umfasst:
eine Phase der Nachsynchronisierung für den Fall eines teilweisen oder vollständigen Verlusts von Daten, der die codierten Bilder übergeordneten Rangs als ein vorher decodiertes Bild betrifft, um das Decodierungsverfahren auf einer Abschnittskopfzeile des Bilds neu zu synchronisieren, die Synchronisierungsphase umfassend eine Analyse der Daten, die das aktuelle codierte Bild zusammensetzen bis zur Erkennung eines Codes, der den Beginn eines Bildabschnitts angibt, der von dem Datenverlust nicht betroffen ist,
eine Vergleichsphase zum Vergleich des Identifizierungsfelds des vorherigen decodierten Bilds mit dem Identifizierungsfeld des aktuellen codierten Bilds,
eine Decodierungsphase zur Decodierung des Bildabschnitts des aktuellen codierten Bilds, der nicht vom Datenverlust betroffen wurde, unter Verwendung eines Teils der identifizierten Codiereigenschaften durch das Identifizierungsfeld des Bildabschnitts des aktuellen codierten Bilds, das nicht vom Datenverlust betroffen wurde, und unter Verwendung andererseits der identifizierten Codiereigenschaften durch die Bildkopfzeile des vorherigen decodierten Bilds, wenn der Vergleich dieser Identifizierungsfelder nicht ergibt:
i) dass das vorher decodierte Bild und das aktuell decodierte Bild vom vorher genannten Typ sind und dass sie unterschiedliche Formate haben,
j) oder dass das vorher decodierte Bild vom nicht vorher genannten Typ ist und das aktuell decodierte Bild vom vorher genannten Typ ist, und dass sie unterschiedliche Formate haben.

3. Verfahren nach Anspruch 1 oder 2, wo ein erstes Bit der Identifizierungsfelder den Bildtyp der codierten Bilder wiederspiegelt, und ein zweites Bit den verwendeten Rundungstyp für die Codierung der Bilder wiederspiegelt.

4. Verfahren nach Anspruch 1 oder 2, wo ein erstes Bit der Identifizierungsfelder den Bildtyp der codierten Bilder wiederspiegelt, und ein zweites Bit das Bildformat der codierten Bilder wiederspiegelt.

5. Codierungssystem zur Codierung einer Bildfolge und zum Erhalt einer Folge codierter Bilder, jedes codierte Bild umfassend eine Bildkopfzeile zur Identifizierung der angewendeten Codiereigenschaften zur Codierung des Bilds, wobei das codierte Bild in Abschnitte umfassend eine Abschnittskopfzeile aufgeteilt wird, und jede Abschnittskopfzeile ein Identifizierungsfeld umfasst, wobei die Identifizierungsfelder für die Abschnitte eines einzelnen codierten Bilds identisch sind, die Identität der Bildkopfzeilen eines aktuell codierten Bilds und eines vorherig codierten Bilds in der Bildfolge die Identität der Identifizierungsfelder der aktuell und vorherig codierten Bilder enthält, eine Änderung in der Bildkopfzeile eines aktuell codierten Bilds zu der eines vorherig codierten Bilds in der codierten Bildfolge zur Änderung der Identifizierungsfelder des aktuellen Bilds in Bezug auf das vorherige Bild führt, wobei das System **dadurch gekennzeichnet ist, dass** es die Füllmittel umfasst, um jedes Bit der Identifizierungsfelder mit einem Wert zu füllen, der direkt eine variable Codiereigenschaft des codierten Bilds identifiziert, mit dem die Identifizierungsfelder verbunden sind, derart, dass die Decodierung mindestens eines Abschnitts eines codierten Bilds bei einem Datenverlust des codierten Bilds möglich ist, der nicht diesen Abschnitt betrifft.

6. Decodierungssystem zur Decodierung eines aktuellen codierten Bilds, das Teil einer Folge codierter Bilder ist, jedes codierte Bild umfassend eine Bildkopfzeile zur Identifizierung der angewendeten Codiereigenschaften zur Codierung des Bilds, wobei jedes codierte Bild in Abschnitte unterteilt ist, umfassend eine Abschnittskopfzeile, jede Abschnittskopfzeile umfassend ein Identifizierungsfeld, und jedes Bit der Identifizierungsfelder direkt eine Codiereigenschaft des codierten Bilds identifiziert, mit dem diese Identifizierungsfelder verbunden sind, wobei das System **dadurch gekennzeichnet ist, dass** es umfasst:
Mittel der Nachsynchronisierung für den Fall eines teilweisen oder vollständigen Verlusts von Daten, der die codierten Bilder übergeordneten Rangs als ein vorher decodiertes Bild betrifft, um das Decodierungsverfahren auf einer Abschnittskopfzeile des Bilds neu zu synchronisieren, die Synchronisierungsphase umfassend eine Analyse der Daten, die das aktuelle codierte Bild zusammensetzen bis zur Erkennung eines Codes, der den Beginn eines Bildabschnitts angibt, der von dem Datenverlust nicht betroffen ist,
Vergleichsmittel zum Vergleich des Identifizierungsfelds des vorherigen decodierten Bilds mit dem Identifizierungsfeld des aktuellen codierten Bilds,
Decodierungsmittel zur Decodierung des Bildabschnitts des aktuellen codierten Bilds, der nicht vom Datenverlust betroffen wurde, unter Verwendung eines Teils der identifizierten Codiereigenschaften durch das Identifizierungsfeld des Bildabschnitts des aktuellen codierten Bilds, das nicht vom Datenverlust betroffen wurde, und unter Verwendung andererseits der identifizierten Codiereigenschaften durch die Bildkopfzeile des vorherigen decodierten Bilds, wenn der Vergleich dieser Identifizierungsfelder nicht ergibt:
i) dass das vorher decodierte Bild und das aktuell decodierte Bild vom vorher genannten Typ sind und dass sie unterschiedliche Formate haben,
j) oder dass das vorher decodierte Bild vom nicht vorher genannten Typ ist und das aktuell decodierte Bild vom vorher genannten Typ ist, und dass sie unterschiedliche Formate haben.

7. Kommunikationssystem umfassend ein Codierungssystem nach Anspruch 5 und ein Decodierungssystemnach Anspruch 6.

8. Mobiltelefon umfassend ein Codierungssystem nach Anspruch 5 und ein Decodierungssystem nach Anspruch 6.

9. Videosignal definierend eine Folge codierter Bilder erhalten durch Codierung einer Bildfolge, jedes codierte Bild umfassend eine Bildkopfzeile zur Identifizierung der angewendeten Codiereigenschaften zur Codierung des Bilds, wobei das codierte Bild in Abschnitte umfassend eine Abschnittskopfzeile aufgeteilt wird, und jeder Bildabschnitt ein Identifizierungsfeld umfasst, das mit Werten gefüllt wird, die direkt variable Codiereigenschaften des codierten Bilds identifizieren, ein Identifizierungsfeld, das für die Abschnitte eines einzelnen Bilds identisch ist, eine Identität der Codiereigenschaften eines aktuell und vorher codierten Bilds, die zur Identität der Identifizierungsfelder dieser zwei Bilder führt, wobei eine Änderung der Codiereigenschaften eines aktuell codierten Bilds in Bezug auf die eines vorher codierten Bilds zur Änderung der Identifizierungsfelder dieses aktuell codierten Bilds führt, und wobei ein erster Wert der Identifizierungsfelder absolut den Typ des codierten Bilds identifiziert, und ein zweiter Wert der Identifizierungsfelder absolut das Format des codierten Bilds oder den Rundungstyp identifiziert, und die sonstigen Codiereigenschaften festgelegt sind.

10. Rechnerprogramm umfassend die Programmcodeanweisungen zur Umsetzung eines Verfahrens nach einem der Ansprüche 1 bis 4.

## Claims

1. Encoding method for encoding a sequence of images and delivering a sequence of encoded images, each encoded image comprising an image header identifying encoding characteristics applied to the encoding of the image, the encoded image being divided into sections comprising a section header, each section header comprising an identifying field, the identifying fields being identical for the sections of the same coded image, identity of the image headers of a current encoded image and of a previous encoded image in the sequence of encoded images giving rise to identity of the identifying fields of said current and previous encoded images, a change in the image header of a current encoded image with respect to that of a previous encoded image in the sequence of encoded images causing the identifying fields of said current image to change with respect to said previous image, a method **characterised in that** it comprises a filling step for filling each bit in the identifying fields with a value directly identifying an encoding characteristic of the encoded image with which said identifying fields are associated, so as to enable decoding of at least one section of the encoded image in the event of loss of data of said encoded image not affecting said section.

2. Decoding method for decoding a current encoded image forming part of a sequence of encoded images, each encoded image comprising an image header identifying encoding characteristics applied to the encoding of the image, each encoded image being divided into sections comprising a section header, each section header comprising an identifying field, each bit in the identifying fields directly identifying an encoding characteristic of the encoded image with which said identifying fields are associated, a method **characterised in that** it comprises :
a resynchronisation step in the event of partial or total loss of the data that affects the encoded images of higher rank than a previously decoded image, in order to resynchronise the decoding method on the image section header, the synchronisation step comprising an analysis of data that make up the current encoded image until a code indicating the start of an image section that has not been affected by the loss of data is located,
a comparison step for comparing the identifying field of the previously decoded image with the identifying field of the current encoded image,
a decoding step for decoding the image section of the current encoded image that has not been affected by the loss of data, using firstly the encoding characteristics identified by the identifying field of the image section of the current encoded image that has not been affected by the loss of data, and secondly using the encoding characteristics identified by the image header of the previously decoded image if the comparison of said identifying fields does not reveal:
i) that the previously decoded image and said current encoded image are of a predicted type, and that they have different formats,
j) or that the previously decoded image is of the non-predicted type and said current encoded image is of the predicted type, and that they have different formats.

3. Method according to claim 1 or 2, where a first bit of the identifying fields reflects the type of image of the encoded images, and a second bit reflects the type of rounding used for encoding the images.

4. Method according to claim 1 or 2, where a first bit of the identifying fields reflects the image type of the encoded images, and a second bit reflects the image format of the encoded images.

5. Encoding system for encoding a sequence of images in order to obtain a sequence of encoded images, each encoded image comprising an image header identifying encoding characteristics applied to the encoding of the image, the encoded image being divided into sections comprising a section header, each section header comprising an identifying field, the identifying fields being identical for the sections of the same coded image, identity of the image headers of a current encoded image and of a previous encoded image in the sequence of encoded images giving rise to identity of the identifying fields of said current and previous encoded images, a change in the image header of a current encoded image with respect to that of a previous encoded image in the sequence of encoded images causing the identifying fields of said current image to change with respect to said previous image, a system **characterised in that** it comprises filling means for filling each bit in the identifying fields with a value directly identifying a variable encoding characteristic of the encoded image with which said identifying fields are associated, so as to enable decoding of at least one section of the encoded image in the event of loss of data of said encoded image not affecting said section.

6. Decoding system for decoding a current encoded image forming part of a sequence of encoded images, each encoded image comprising an image header identifying encoding characteristics applied to the encoding of the image, each encoded image being divided into sections comprising a section header, each section header comprising an identifying field, each bit in the identifying fields directly identifying an encoding characteristic of the encoded image, a system **characterised in that** it comprises :
means for resynchronisation in the event of partial or total loss of the data that affects the encoded images of higher rank than a previously decoded image, in order to resynchronise the decoding method on the image section header, the synchronisation step comprising an analysis of data that make up the current encoded image until a code indicating the start of an image section that has not been affected by the loss of data is located,
comparison means for comparing the identifying field of the previously decoded image with the identifying field of the current encoded image,
decoding means for decoding the image section of the current encoded image that has not been affected by the loss of data, using firstly the encoding characteristics identified by the identifying field of the image section of the current encoded image that has not been affected by the loss of data, and secondly using the encoding characteristics identified by the image header of the previously decoded image if the comparison of said identifying fields does not reveal:
i) that the previously decoded image and said current encoded image are of a predicted type, and that they have different formats,
j) or that the previously decoded image is of the non-predicted type and said current encoded image is of the predicted type, and that they have different formats.

7. Communication system comprising an encoding system according to claim 5 and a decoding system according to claim 6.

8. Mobile telephone comprising an encoding system according to claim 5 and a decoding system according to claim 6.

9. Video signal defining a sequence of encoded images obtained by encoding a sequence of images, each encoded image comprising an image header identifying encoding characteristics applied to the encoding of the image, the encoded image being divided into sections, each image section comprising an identifying field filled with values directly identifying variable encoding characteristics of said encoded image, an identifying field being identical for the sections of the same image, identity of the encoding characteristics of a current and previous encoded image giving rise to identity of the identifying fields of these two images, a change in the encoding characteristics of a current encoded image with respect to those of a previous image causing the identifying fields of said current image to change, a first value of the identifying fields identifying absolutely the type of the encoded image, a second value of the identifying fields identifying absolutely the format of the encoded image or the type of rounding, the other encoding characteristics being fixed.

10. Computer program containing program code instructions for implementing a method according to one of claims 1 to 4.
